# EUROPEAN PATENT SPECIFICATION

(11) **EP 2 795 216 B1**
(45) Date of publication and mention of the grant of the patent: **20.11.2019**
(21) Application number: 12859864.6
(22) Date of filing: 18.12.2012
(51) Int. Cl.: F25J 5/00

(54) **METHOD FOR REDUCING THE IMPACT OF MOTION IN A CORE-IN-SHELL HEAT EXCHANGER**
VERFAHREN ZUR REDUZIERUNG DER AUSWIRKUNG VON BEWEGUNG IN EINEM KERN-HÜLLE-WÄRMETAUSCHER
MÉTHODE DE RÉDUCTION DE L'IMPACT DU MOUVEMENT DANS UN ÉCHANGEUR DE CHALEUR À C UR ET CALANDRE

(30) Priority: 20.12.2011 US 201161578144 P
(43) Date of publication of application: 29.10.2014
(73) Proprietor: ConocoPhillips Company, Houston, Texas 77079 (US)
(72) Inventor: DAVIES, Paul, R., Richmond, Texas 77406 (US); JAMES, Will, T., Richmond, Texas 77406 (US); GRAVOIS, Shaun, P., Katy, Texas 77450 (US); OSHINOWO, Olanrewaju, M., Katy, Texas 77494 (US); DIETRICH, Jorg, 83533 Edling (DE); KAYSER, Stefan, 83308 Trostberg (DE); WANKE, Rudolf, 85570 Ottenhofen (DE); BRENNER, Steffen, 83308 Trostberg (DE)
(74) Representative: Simpson, Paul Christopher
(86) International application number: PCT/US2012/070383
(87) International publication number: WO 2013/096328

(56) References cited:
- EP-A1- 0 676 604
- WO-A1-00/25075
- GB-A- 1 299 643
- US-A- 3 583 370
- US-A- 4 882 283
- US-A- 5 651 270
- US-A- 5 651 270
- US-A1- 2006 086 139
- US-A1- 2006 086 140
- US-A1- 2006 086 140
- US-A1- 2010 319 877
- US-B1- 6 827 138
- US-B2- 6 848 725

## Description

### FIELD OF THE INVENTION

This invention relates to a method and apparatus for reducing the effects of motion in a core-in-shell type heat exchanger.

### BACKGROUND OF THE INVENTION

Natural gas in its native form must be concentrated before it can be transported economically. The use of natural gas has increased significantly in the recent past due to its environmentally-friendly, clean burning characteristics. Burning natural gas produces less carbon dioxide than any other fossil fuel, which is important since carbon dioxide emissions have been recognized as a significant factor in causing the greenhouse effect. Liquefied natural gas (LNG) is likely to be used more and more in densely-populated urban areas with the increased concern over environmental issues.

Abundant natural gas reserves are located all over the world. Many of these gas reserves are located offshore in places that are inaccessible by land and are considered to be stranded gas reserves based on application of existing technology. Existing technical reserves of gas are being replenished faster than oil reserves, making the use of LNG more important to meeting the demands of future energy consumption. In liquid form, LNG occupies 600 times less space than natural gas in its gaseous phase. Since many areas of the world cannot be reached by pipelines due to technical, economic, or political limits, locating the LNG processing plant offshore and utilizing a nautical vessels to directly transport the LNG offshore from the processing plant to the transportation vessel can reduce initial capital expenditure and release otherwise uneconomical offshore gas reserves.

Floating liquefaction plants provide an off-shore alternative to on-shore liquefaction plants and alternative to costly subsea pipeline for stranded offshore reserves. A floating liquefaction plant can be moored off the coast, or close to or at a gas field. It also represents a moveable asset, which can be relocated to a new site when the gas field is nearing the end of its production life, or when required by economic, environmental or political conditions.

One problem encountered in floating liquefaction vessels is the sloshing of vaporizing fluid inside heat exchangers. Sloshing in a heat exchanger may result in the production of forces that can affect stability and control of the heat exchanger. If the vaporizing fluid is allowed to slosh freely inside the shell of the heat exchanger, the moving fluid can have an adverse effect on the thermal function of the heat exchanger core. Furthermore, the cyclical nature of motion may result in cyclical behavior in heat transfer efficiency, and hence, process conditions in the LNG liquefaction plant may be impacted. These instabilities may result in poorer overall plant performance and may lead to narrower operating envelopes and limits to the available production capacity.

US2006/086140A1 describes a core-in-shell heat exchanger comprising a shell containing refrigerant liquid and a heat exchanger core. Moreover, document US5651270 describes a method according to the preamble of claim 1.

Therefore, a need exists for a method and apparatus for reducing the effects of motion within a core-in-shell type heat exchanger.

### SUMMARY OF THE INVENTION

The invention comprises a method for reducing the impact of motion in a core-in-shell type heat exchanger according to claim 1.

### BRIEF DESCRIPTION OF THE DRAWINGS

An embodiment of the invention, together with further advantages thereof, may best be understood by reference to the following description taken in conjunction with the accompanying drawings in which:

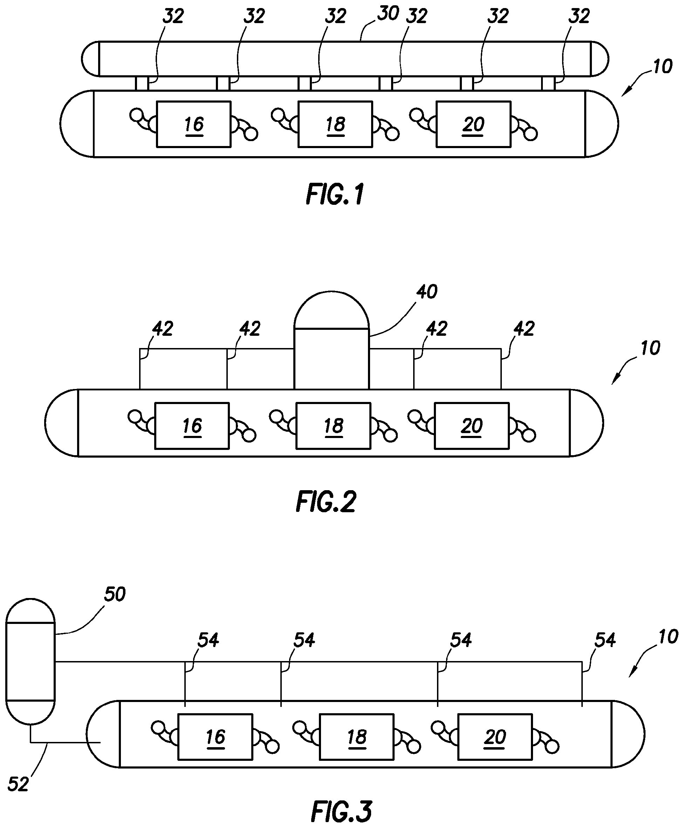

FIG. 1 is a schematic of a core-in-shell heat exchanger, according to one embodiment of the invention involving an external horizontal separator.

The embodiments shown in Fig. 2 and Fig. 3 do not fall within the scope of the claims.

### DETAILED DESCRIPTION OF THE INVENTION

Reference will now be made in detail to embodiments of the present invention, one or more examples of which are illustrated in the accompanying drawings. Each example is provided by way of explanation, not as a limitation. It will be apparent to those skilled in the art that various modifications and variations can be made in the present invention without departing from the scope of the invention. For instance, features illustrated or described as part of one embodiment can be used in another embodiment to yield a still further embodiment. Thus, it is intended that the present invention cover such modifications and variations that come within the scope of the appended claims.

Referring to FIG. 1, a heat exchanger 10 generally includes a shell and a plurality of spaced apart cores, i.e., a first core 16, a second core 18, and a third core 20 within the shell. The plurality of spaced apart cores within the heat exchanger 10 includes at least one core. For illustrative purposes, the heat exchanger is horizontally disposed; however, the heat exchanger may be positioned in any commercially operable manner, such as vertically, for example. The plurality of spaced apart cores within the shell are completely submerged, i.e., flooded, in vaporizing fluid, i.e., a liquid refrigerant.

A principle design of the core-in-shell heat exchanger provides cross exchange of a hot process feed stream against the colder vaporizing fluid. The vaporizing fluid resides in a pressure vessel where brazed aluminum compact exchanger cores are mounted and completely submerged in the vaporizing fluid which is at or near its boiling point. The liquid is drawn into the bottom face of the exchanger where it contacts the hotter surfaces within the core. The vaporizing fluid then transfers heat through the exchanger core channels. The majority of the heat transfer is from the latent heat of vaporization of the vaporizing fluid. The hot process feed stream is cooled or condensed as it passes through the opposite side of the channels in the exchanger cores.

The thermal and hydraulic performance of the core-in-shell heat exchanger is dependent upon the liquid level in the exchanger. A driving force for circulation of the vaporizing fluid into the exchanger cores is the thermosiphon effect. The thermosiphon effect is a passive fluid transfer phenomenon resulting from natural convective thermal forces. As the vaporization of the fluid occurs, the vaporizing fluid is heated and the vaporizing fluid density decreases. As it naturally flows upward in the channels, fresh liquid is drawn in. This results in a natural circulation of the vaporizing fluid into the core channels induced by the thermal gradient inside the core. Not all vaporizing fluid in the channel is vaporized and a mixture of liquid and vapors typically are transported up through the exchanger core channels and expelled through the top of the core. Above the core, adequate space must be provided for the vapor and liquid to disengage so that only vapor leaves the overhead section of the shell side of the core. Liquid that separates in the upper section of the exchanger is then re-circulated to the bottom of the vessel where it is then vaporized in the core. The driving force for separation of the liquid and the gas in the upper section of the core-in-shell heat exchanger is gravity.

The thermosiphon circulation effect in the core is enhanced or impaired by the external hydraulic pressure (level differences) between the effective liquid levels inside the core versus the liquid level outside the core. As the liquid level in the shell falls, the driving force for the transfer of the liquid into the exchanger core is decreased, and the effective heat transfer is reduced. When the liquid level falls below the core, the vaporizing fluid circulation stops due to the loss of the thermosiphon effect which results in the loss of heat transfer. If the heat exchanger is operated with a liquid level higher than the core, i.e., flooded, the heat transferred is impaired further as the vapor produced in the core has to overcome the additional head to escape from the core.

To overcome the impact of a flooded heat exchanger and to ensure disengagement of the non-vaporized stream, a mixture of vapor and liquid, an upper vessel 30 is utilized, such as depicted in FIG. 1. The upper vessel 30 is located above the heat exchanger 10 and includes a plurality of vapor disengaging conductor pipes 32 connecting the upper vessel 30 to the shell of the heat exchanger 10. The conductor pipes 32 consist of an external pipe connecting the two vessels. Inside the conductor pipes resides an internal smaller diameter vapor riser. The vapor riser, not shown in FIG. 1, is fixed to the top of the core, 16, 18, 20 and floats inside the conductor pipe 32 so as to allow for thermal expansion and contraction of the exchanger cores 16, 18, 20. The vapor riser terminates inside the upper vessel 30 above the normal liquid level of the upper vessel 30. The vapor riser is fastened to the top of the cores 16, 18, 20 via a top manifold on the cores 16, 18, 20 so as to collect the non-vaporized stream exiting the internal cores 16, 18, or 20. The non-vaporized stream is introduced to the upper vessel 30. The non-vaporized stream is then separated in the upper vessel 30 so that liquid flows down the annulus (between the outside of the vapor riser and the inside of the conductor pipe) of the conductor pipe 32 into the shell of the heat exchanger 10 via the plurality of conductor pipes 32.

Upon entry into the heat exchanger shell 10 via a plurality of connecting pipes, the hot process feed streams are delivered to the plurality of spaced apart cores via externally connecting pipes in order to separately undergo indirect heat exchanger with the vaporizing fluid. The plurality of spaced apart cores each receives a separate hot process feed stream, allowing for simultaneous indirect heat transfer between the vaporizing fluid and the separate hot process feed streams. The vaporizing fluid and the hot process feed stream flow in a cross-current manner in alternating plate and fin channels inside each core.

As previously discussed, only a portion of the vaporizing fluid is vaporized in the core resulting in a mixture of vapor and liquid, i.e., the non-vaporized stream, existing the top of the core, which must be disengaged in the upper vessel 30. The vapor risers are designed such that the non-vaporized stream exiting the core remains a mixed phase stream and are routed inside the inner pipe connected via manifold from the top of the plurality of cores 16, 18, 20 of the heat exchanger 10 and terminates inside the upper vessel 30 above the normal liquid level in the upper vessel 30. The vapor from non-vaporized stream disengages in the upper vessel 30 and is mixed with the vapor from the non-vaporized stream entering the upper chamber 30. In this embodiment, the upper vessel includes slosh suppressing baffles to minimize liquid surface movement.

In closing, it should be noted that the discussion of any reference is not an admission that it is prior art to the present invention, especially any reference that may have a publication date after the priority date of this application.

Although the systems and processes described herein have been described in detail, it should be understood that various changes, substitutions, and alterations can be made without departing from the scope of the invention as defined by the following claims. Those skilled in the art may be able to study the preferred embodiments and identify other ways to practice the invention that are not exactly as described herein. The description, abstract and drawings are not to be used to limit the scope of the invention. The invention is specifically intended to be as broad as the claims.

## Claims

1. A method for reducing the impact of motion in a core-in-shell type heat exchanger (10) comprising:
a. flooding the heat exchanger (10) with a refrigerant vaporizing fluid, wherein the heat exchanger (10) includes an internal volume defined within a shell and a plurality of spaced apart cores (16, 18, 20) disposed within the internal volume of the shell;
b. delivering a hot process feed stream to a core (16, 18, 20) within the internal volume of the shell, wherein the hot process feed stream undergoes indirect heat exchange with the vaporizing fluid thereby producing a warm liquid stream and a non-vaporized stream, wherein the non-vaporized stream includes a mixture of vapor and liquid; ***characterized by***
c. providing an upper vessel (30), wherein the upper vessel (30) is located above the heat exchanger (10), wherein the upper vessel (30) is connected to the heat exchanger (10) via a plurality of conductor pipes (32), wherein the conductor pipes (32) include external pipes for connecting the upper vessel (30) and the shell, wherein the conductor pipes (32) further include an internal diameter vapor riser, wherein the internal vapor riser is fixed to the top of the plurality of cores (16, 18, 20) and floats inside the conductor pipe (32) to allow for thermal expansion and contraction of the plurality of cores (16, 18, 20);
d. delivering the non-vaporized stream to the upper vessel (30) via the internal vapor risers in the conductor pipes (32) to undergo disengagement, the vapor risers terminating above a normal liquid level inside the upper vessel (30).

2. The method according to claim 1, wherein the upper vessel (30) includes slosh suppressing baffles.

## Patentansprüche

1. Verfahren zum Reduzieren der Auswirkung von Bewegung in einem Wärmeaustauscher (10) vom Core-in-Shell-Typ, umfassend:
a. Fluten des Wärmetauschers (10) mit einem Kühlmittel zerstäubenden Fluid, wobei der Wärmetauscher (10) einen Innenraum einschließt, der innerhalb eines Mantels definiert ist, und eine Vielzahl beabstandeter Kerne (16, 18, 20), die innerhalb des Innenraums des Mantels angeordnet sind;
b. Liefern eines heißen Prozesszustroms zu einem Kern (16, 18, 20) innerhalb des Innenvolumens des Mantels, wobei der heiße Prozesszustrom indirektem Wärmeaustausch mit der Zerstäubungsflüssigkeit unterliegt, wodurch ein warmer Flüssigkeitsstrom und ein nicht zerstäubter Strom erzeugt werden, wobei der nicht zerstäubte Strom ein Gemisch aus Dampf und Flüssigkeit einschließt; ***gekennzeichnet durch***
c. Bereitstellen eines oberen Behälters (30), wobei der obere Behälter (30) oberhalb des Wärmetauschers (10) liegt, wobei der obere Behälter (30) mit dem Wärmetauscher (10) über eine Vielzahl von Leiterrohren (32) verbunden ist, wobei die Leiterrohre (32) externe Rohre zum Verbinden des oberen Behälters (30) und des Mantels einschließt, wobei die Leiterrohre (32) weiter eine Innendurchmesser-Dampfsteigleitung einschließen, wobei die innere Dampfsteigleitung an der Oberseite der Vielzahl von Kernen (16, 18, 20) befestigt ist und innerhalb des Leiterrohrs (32) schwebt, um Wärmeausdehnung und Zusammenziehen der Vielzahl von Kernen (16, 18, 20) zu erlauben;
d. Liefern nicht zerstäubten Stroms zu dem oberen Behälter (30) über die internen Dampfsteigleitungen in die Leiterrohre (32), um Trennung zu erfahren, wobei die Dampfsteigleitungen oberhalb eines normalen Flüssigkeitsniveaus innerhalb des oberen Behälters (30) enden.

2. Verfahren nach Anspruch 1, wobei der obere Behälter (30) Schwappunterdrückungsdampfsperren einschließt.

## Revendications

1. Procédé de réduction de l'impact de mouvement dans un échangeur de chaleur de type à cœur et calandre (10) comprenant :
a. le remplissage de l'échangeur de chaleur (10) avec un fluide de vaporisation de réfrigérant, dans lequel l'échangeur de chaleur (10) inclut un volume interne défini dans une calandre et une pluralité de cœurs espacés (16, 18, 20) disposés dans le volume interne de la calandre ;
b. la fourniture d'un courant d'alimentation de procédé chaud à un cœur (16, 18, 20) dans le volume interne de la calandre, dans lequel le courant d'alimentation de procédé chaud subit un échange de chaleur indirect avec le fluide de vaporisation produisant ainsi un courant de liquide chaud et un courant non vaporisé, dans lequel le courant non vaporisé inclut un mélange de vapeur et de liquide ; ***caractérisé par***
c. la fourniture d'une cuve supérieure (30), dans lequel la cuve supérieure (30) est positionnée au-dessus de l'échangeur de chaleur (10), dans lequel la cuve supérieure (30) est raccordée à l'échangeur de chaleur (10) via une pluralité de tuyaux conducteurs (32), dans lequel les tuyaux conducteurs (32) incluent des tuyaux externes pour le raccordement de la cuve supérieure (30) et la calandre, dans lequel les tuyaux conducteurs (32) incluent en outre un tuyau montant de vapeur de diamètre interne, dans lequel le tuyau montant de vapeur interne est fixé au dessus de la pluralité de cœurs (16, 18, 20) et flotte à l'intérieur du tuyau conducteur (32) pour permettre la dilatation et la contraction thermique de la pluralité de cœurs (16, 18, 20) ;
d. la fourniture du courant non vaporisé à la cuve supérieure (30) via les tuyaux montants de vapeur internes dans les tuyaux conducteurs (32) pour subir la mise hors prise, les tuyaux montants de vapeur se terminant au-dessus d'un niveau de liquide normal à l'intérieur de la cuve supérieure (30).

2. Procédé selon la revendication 1, dans lequel la cuve supérieure (30) inclut des déflecteurs antiballotement.
